# EUROPÄISCHE PATENTANMELDUNG

(11) **EP 2 662 585 A1**
(43) Veröffentlichungstag der Anmeldung: **13.11.2013**
(21) Anmeldenummer: 13166804.8
(22) Anmeldetag: 07.05.2013
(51) Int. Cl.: F16D 27/105, F16D 27/00

(54) **Elektrisch zu betätigende Kupplung**

(30) Priorität: 08.05.2012 DE 102012009324
(71) Anmelder: Compact Dynamics GmbH, 82319 Starnberg (DE)
(72) Erfinder: Hoffmann, Bernhard, 82319 Starnberg (DE); Gruendl, Andreas, 82319 Starnberg (DE); Rasch, Reinhard, 82229 Hechendorf (DE)
(74) Vertreter: Schmidt, Steffen J.

(57) **Zusammenfassung**

Eine elektrisch zu betätigende Kupplung (10) hat einen ortsfesten Träger (12) sowie ein erstes Kupplungsglied (14) und ein zweites Kupplungsglied (16). Das erste Kupplungsglied (14) und das zweite Kupplungsglied (16) sind um eine gemeinsame Achse relativ zu dem ortsfesten Träger (12) und relativ zueinander drehbar angeordnet. Der Träger (12) weist eine in einem ersten weicheisenhaltigen Teilkern (12a) teilweise aufgenomm eine, dem ersten Kupplungsglied (14) zugewandte Spulenanordnung auf. Das erste Kupplungsglied (14) weist einen zweiten weicheisenhaltigen Teilkern (14a) mit Magnetfluss-Polen auf, welche die Spulenanordnung des ortsfesten Trägers (12) zusammen mit dem weicheisenhaltigen ersten Teilkern in radialer Richtung zumindest teilweise einfassen und dem zweiten Kupplungsglied (16) zugewandt sind. Das zweite Kupplungsglied (16) weist den Magnetfluss-Polen (14c) zugewandte, mit diesen korrespondierende Permanentmagnet-Elemente (N, S) auf, die zumindest in einigen Positionen des zweiten Kupplungsglieds relativ zum ersten Kupplungsglied (14) zumindest teilweise mit wenigstens einigen der Magnetfluss-Pole (14c)fluchten. Das erste Kupplungsglied (14) und das zweite Kupplungsglied (16) sind dazu eingerichtet, ein Drehmoment und/ oder eine Drehbewegung von dem einen Kupplungsglied auf das andere Kupplungsglied zu übertragen, wobei die Spulenanordnung dazu eingerichtet ist, mit einem Wechselrichter (WR) verbunden zu sein, um das Maß der Übertragung des Drehmoments und/ oder der Drehbewegung von dem einen Kupplungsglied auf das andere Kupplungsglied zu beeinflussen.

## Beschreibung

### Hintergrund, Stand der Technik

Hier wird eine elektrisch zu betätigende Kupplung offenbart, die ein erstes Kupplungsglied und ein zweites Kupplungsglied hat. Bei dieser elektrisch zu betätigenden Kupplung wird ein zwischen dem ersten und dem zweiten Kupplungsglied herrschender Schlupf durch elektrische Steuersignale beeinflusst. So kann ein von einem Kupplungsglied zum anderen Kupplungsglied übertragenes Drehmoment variiert werden und / oder das Verhältnis einer Drehzahl des ersten Kupplungsglieds zu einer Drehzahl des zweiten Kupplungsglieds eingestellt werden.

Kupplungen dienen dazu, eine ständige oder eine zeitweise drehfeste Verbindung von Wellen, Rädern oder anderen Antriebselementen herzustellen und dabei zum Beispiel Kräfte und Momente leiten, die Antriebselemente zu trennen und zu verbinden, d.h. zu schalten, Drehmoment- und Geschwindigkeitsschwankungen zu dämpfen.

Das Drehmoment wird von Elektromagnetkupplungen reibschlüssig im Trockenlauf übertragen. Die Momentübertragung bei den Elektrokupplungen erfolgt meist verdrehspielfrei.

Im Gegensatz zu formschlüssigen Kupplungen erfolgt die Kraftübertragung bei Magnetfeldkupplungen über magnetische Felder. Bedingt durch die relativ lose Kopplung zwischen Antrieb und Abtrieb geht beim Überschreiten des maximal übertragbaren Momentes der Kraftschluss zwischen Antrieb und Abtrieb verloren.

In der Klasse der drehnachgiebigen, nicht versatz-ausgleichenden Kupplungen sind zum Beispiel Magnetpulverkupplungen angesiedelt. Magnetpulverkupplungen enthalten ein Eisenpulver, das zur Übertragung des Drehmoments von einem Außen- auf einen Innenrotor dient. Das Eisenpulver der Pulverkupplungen bildet magnetische Ketten und überträgt so das Drehmoment vom Außen- auf den Innenrotor. Das übertragbare Drehmoment der Magnetkupplungen wird durch den Grad der elektromagnetischen Erregung bestimmt, was eine stufenlose Veränderung des übertragenen Drehmomentes und eine geräuschlose Betätigung erlaubt. Das übertragene Drehmoment ist proportional zum Erregerstrom. Die Magnetpulverkupplungen sind für Dauerschlupf geeignet. Sie erlauben so eine Drehmomentregelung, oder -begrenzung und sind als sanfte Anfahrkupplung geeignet.

### Zugrunde liegendes Problem

Ziel ist es, eine kompakt bauende und hocheffiziente elektrisch zu betätigende Kupplung bereit zu stellen.

### Lösung

Um dieses Ziel zu erreichen, wird hier eine elektrisch zu betätigende Kupplung mit den Merkmalen des Patentanspruchs 1 vorgeschlagen. Dabei hat die elektrisch zu betätigende Kupplung einen ortsfesten Träger sowie ein erstes Kupplungsglied und ein zweites Kupplungsglied. Das erste Kupplungsglied und das zweite Kupplungsglied sind um eine gemeinsame Achse relativ zu dem ortsfesten Träger und relativ zueinander drehbar angeordnet. Der Träger weist eine in einem ersten weicheisenhaltigen Teilkern teilweise aufgenommeine, dem ersten Kupplungsglied zugewandte Spulenanordnung auf. Das erste Kupplungsglied weist einen zweiten weicheisenhaltigen Teilkern mit Magnetfluss-Polen auf, welche die Spulenanordnung des ortsfesten Trägers zusammen mit dem weicheisenhaltigen ersten Teilkern in radialer Richtung zumindest teilweise einfassen und dem zweiten Kupplungsglied zugewandt sind. Das zweite Kupplungsglied weist den Magnetfluss-Polen zugewandte, mit diesen korrespondierende Permanentmagnet-Elemente auf, die zumindest in einigen Positionen des zweiten Kupplungsglieds relativ zum ersten Kupplungsglied zumindest teilweise mit wenigstens einigen der Magnetfluss-Pole fluchten. Das erste Kupplungsglied und das zweite Kupplungsglied sind dazu eingerichtet, ein Drehmoment und/ oder eine Drehbewegung von dem einen Kupplungsglied auf das andere Kupplungsglied zu übertragen, wobei die Spulenanordnung dazu eingerichtet ist, mit einem Wechselrichter verbunden zu sein, um das Maß der Übertragung des Drehmoments und/ oder der Drehbewegung von dem einen Kupplungsglied auf das andere Kupplungsglied zu beeinflussen.

### Vorteile, Ausgestaltungen und Weiterbildungen

Ein Vorteil dieser Anordnung ist, dass die Spulenanordnung zur Erregung der Teilkerne mit dem ortsfesten Träger stationär ist, also ohne rotierenden Kontakt - Schleifringanordnungen oder dergl. auskommt. Dies trägt zur Wartungsfreundlichkeit der Gesamtanordnung bei.

Der erste Teilkern des Trägers und der zweite Teilkern des ersten Kupplungsglieds können durch einen ersten Luftspalt voneinander getrennt sein. Der zweite Teilkern des ersten Kupplungsglieds kann an seiner von dem ersten Luftspalt abgewandten Seite von den Permanentmagnet-Elementen des zweiten Kupplungsglieds durch einen zweiten Luftspalt getrennt sein.

Dabei können der erste Teilkern des Trägers und der zweite Teilkern des ersten Kupplungsglieds zueinander korrespondierende, drehsymmetrische Umfangsflächen haben, die den ersten Luftspalt begrenzen. Der zweite Teilkern des ersten Kupplungsglieds und die Permanentmagnet-Elemente des zweiten Kupplungsglieds können zueinander korrespondierende, drehsymmetrische Umfangsflächen haben, die den zweiten Luftspalt in radialer Richtung begrenzen.

Zueinander in Umlaufrichtung, des zweiten Kupplungsglieds benachbarte, d.h entlang des Umfangs in einer Reihe angeordnete Permanentmagnet-Elemente können jeweils zu dem zweiten Luftspalt hin magnetisch abwechselnd orientiert sein. Außerdem können mehrere derartige Reihen aufeinander folgend an dem zweiten Kupplungsglied vorgesehen sein, die dazu eingerichtet sind, mit entsprechenden Spulenanordnungen sowie ersten und zweiten Teilkernen zusammenzuwirken.

Das erste Kupplungsglied kann einen ersten Koppelflansch haben und das zweite Kupplungsglied kann einen zweiten Koppelflansch haben.

Der Wechselrichter kann mit einer elektronischen Steuereinrichtung verbunden sein, welche das von dem einen Kupplungsglied auf das andere Kupplungsglied übertragene Drehmoment und/ oder die Drehbewegung durch die Frequenz, Phase und/oder den Betrag und die Flussrichtung der elektrischen Leistung beeinflusst, welche zwischen dem Wechselrichter und der Spulenanordnung fließt. So kann durch Leistungszu- oder -abfuhr zu/von der Spulenanordnung der Grad der Kopplung zwischen den beiden Kupplungsgliedern zwischen etwa Null (entspricht einem Freilauf) und 100% (entspricht in der Wirkung etwa einer starren, z.B. formschlüssigen, direkten Kopplung) variiert werden, indem der Wechselrichter entsprechend angesteuert wird.

Der erste Teilkern des Trägers und der zweite Teilkern des ersten Kupplungsglieds können einteilig oder mehrteilig aus einem weicheisenhaltigen Blech oder aus gepresstem, gesintertem Reineisenpulver oder aus eisenhaltigem Pulver gebildet sein.

Die Permanentmagnet-Elemente können aus einer AINi- oder AINiCo-Legierung, aus Barium-oder Strontiumferrit, aus dauermagnetischen Seltenerdenlegierung, auch eingebettet in Kunststoffbinder gebildet sein.

Die Permanentmagnet-Elemente können eine im Wesentlichen quaderförmige Gestalt aufweisen und mit einem Weicheisen-Rückschluss des Trägers zusammenwirken. Des Weiteren kann eine sog. Halbach-Anordnung für die Permanentmagnet-Elemente eingesetzt werden, deren Magnetisierungsrichtung gegeneinander jeweils um 90° in Richtung der Längsachse der Anordnung gekippt ist. Dadurch rücken die Feldlinien auf der Seite, in deren Richtung der Direktor des Feldes gekippt wird, enger zusammen, was eine Erhöhung der magnetischen Flussdichte bewirkt. Auf der gegenüberliegenden Seite liegen die Feldlinien weniger eng als im ungestörten Magneten, daher wird das Feld schon in geringem Abstand abgeschwächt, oder verschwindet völlig, da sich Nord-und Südpole jeweils abwechseln.

Die Spulenanordnung kann eine ringzylindrische Wicklung aus Litzen mit miteinander verdrillten oder verflochtenen isolierten Einzelleitern aufweisen; bei höheren Windungszahlen kann die Spulenanordnung einen aufgewickelten Einzelleiter aufweisen.

Zum zumindest teilweisen Einfassen der Spulenanordnung durch den ersten weicheisenhaltigen Teilkern des Trägers und die Magnetfluss-Pole des ersten Kupplungsglieds können zueinander benachbarte Magnetfluss-Pole voneinander beabstandet sein und versetzt aufeinander zu gerichtet sein.

Die zueinander benachbarten Magnetfluss-Pole können sich koaxial zu der Drehachse in abwechselnder Richtung verjüngen und versetzt zwischen einander greifen.

Das erste Kupplungsglied und das zweite Kupplungsglied können dazu eingerichtet sein, im Antriebsstrang eines Kraftfahrzeuges zwischen einer Kurbelwelle eines Verbrennungsmotors und einem (Schalt- oder Automatik-)getriebeeingang angeordnet zu sein um, gesteuert durch die Einspeisung oder Auskopplung elektrischer Leistung durch den bzw. in den Wechselrichter, Schwingungen des Verbrennungsmotors zu dämpfen und / oder dabei elektrische Leistung in ein elektrisches Bordnetz des Kraftfahrzeuges auszukoppeln.

Das erste Kupplungsglied und das zweite Kupplungsglied können durch eine in / gegen die Drehrichtung wirkende Feder miteinander verbunden sein. Das erste Kupplungsglied und das zweite Kupplungsglied können dazu eingerichtet sein, beliebige Drehwinkel um die Längsachse zu einander einzunehmen, und zwischen dem ersten Kupplungsglied und dem zweiten Kupplungsglied kann ein Generatorbetrieb oder ein Motorbetrieb durch entsprechende Ansteuerung des Wechselrichters durch die elektronischen Steuereinrichtung einzustellen sein.

Im Generatorbetrieb kann bei Relativdrehzahl zwischen dem ersten Kupplungsglied und dem zweiten Kupplungsglied eine Lichtmaschinenfunktion durch die vorliegende Kupplung implementiert werden. Bei konstantem zu übertragenden Drehmoment trägt hier die Feder das Drehmoment vollständig; die elektrisch zu betätigende Kupplung dient hier lediglich zur Schwingungsdämpfung.

Im Motorbetrieb kann bei Relativdrehzahl zwischen dem ersten Kupplungsglied und dem zweiten Kupplungsglied eine Anlasserfunktion (gegen ein blockiertes Fahrzeuggetriebe, z. B. durch die Fahrzeugbremse) durch die vorliegende Kupplung implementiert werden.

Schließlich ist mit der vorliegenden Kupplung auch ein Hybridbetrieb implementierbar: Elektrisch Anfahren bei blockiertem Verbrennungsmotor und zusätzliche Drehzahlzufuhr beim Beschleunigen sowie elektrisches Rekuperieren von Bremsenergie bei blockiertem Verbrennungsmotor.

### Kurzbeschreibung der Zeichnung

Weitere Merkmale, Eigenschaften, Vorteile und mögliche Abwandlungen werden für einen Fachmann anhand der nachstehenden Beschreibung deutlich, in der auch auf die beigefügten Zeichnungen Bezug genommen ist.
Fig. 1 ist eine schematische Längsschnittdarstellung einer Kupplung der hier vorgestellten Art.
Fig. 2 ist ein schematischer perspektivischer Ausschnitt eines zweiten Teilkerns.

Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten abweichen.

### Detaillierte Beschreibung der Zeichnung

Fig. zeigt eine elektrisch zu betätigende Kupplung 10, die in der hier gezeigten Variante einen ortsfesten rohrförmigen Träger 12 hat, in dem ein erstes Kupplungsglied 14 und ein zweites Kupplungsglied 16 aufgenommen ist. Der Träger 12 fasst hier die Kupplung 10 ein und hat außerdem eine Gehäusewand 12a. Das erste Kupplungsglied 14 und das zweite Kupplungsglied 16 sind um eine gemeinsame Achse relativ zu dem ortsfesten Träger 12 und relativ zueinander drehbar angeordnet. Ein Drehmoment und/ oder eine Drehbewegung kann in weiter unten im Detail erläuterten Weise von dem einen Kupplungsglied 14, 16 auf das andere Kupplungsglied 16, 14 übertragen werden.

Der Träger 12 hat eine in einem ersten weicheisenhaltigen Teilkern 12b teilweise aufgenommene Spulenanordnung 18. Dazu trägt der rohrförmige Träger 12 an der Innenseite seiner Gehäusewand 12a einen Stapel aus Ringscheiben aus einem weicheisenhaltigen Blech. Anstelle des Blechstapels aus Weicheisen und des Trägers sind in einer alternativen Ausführungsform diese Komponenten aus einem Sintered Metal Composite - SMC - Material gebildet. In diesem Blechstapel sind zur Innenseite hin offene ringzylindrische Ausnehmungen vorgesehen, in denen jeweils eine Spulenanordnung 18 aufgenommen ist. Damit fasst der Blechstapel jeweils eine Spulenanordnung 18 etwa U-förmig ein, so dass jede Spulenanordnung 18, durch einen ersten ringzylindrischer Luftspalt 20 getrennt, mit ihrer freien Innenfläche dem ersten Kupplungsglied 14 zugewandt ist.

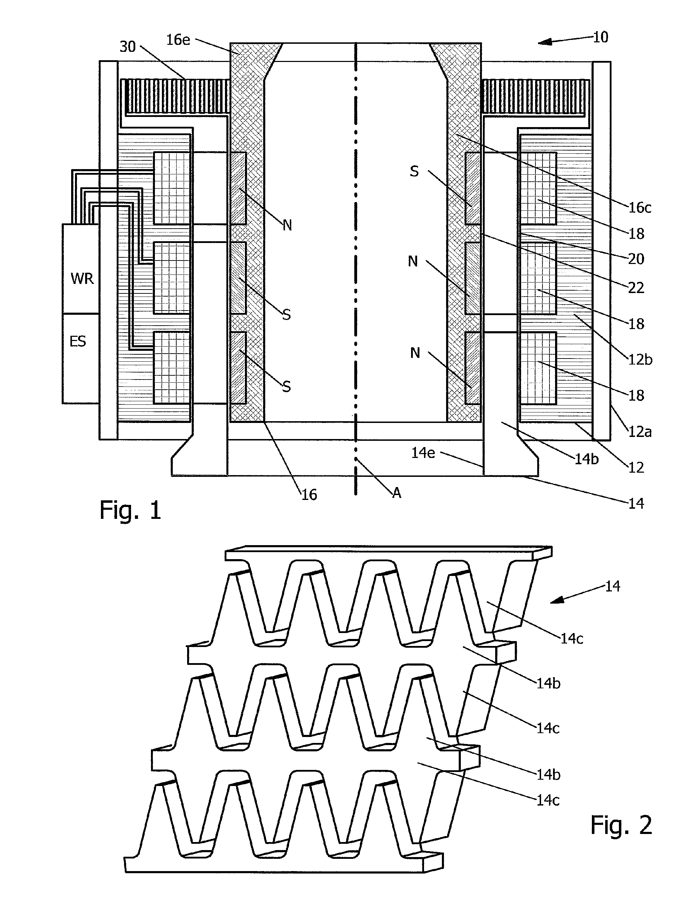

Das erste Kupplungsglied 14 hat einen zweiten weicheisenhaltigen Teilkern 14b mit Magnetfluss-Polen 14c (siehe auch Fig. 2), welche die Spulenanordnung 18 des ortsfesten Trägers 12 zusammen mit dem weicheisenhaltigen ersten Teilkern 12b in radialer Richtung einfassen. In der gezeigten Varianten ist der zweite Teilkern 14b des ersten Kupplungsglieds 14 mehrteilig aus gepresstem, gesintertem Reineisenpulver oder SMC - Material gebildet. An der Innenseite des ersten Kupplungsglieds 14 sind die Magnetfluss-Pole 14c dem zweiten Kupplungsglied 16 zugewandt. Dabei ist zwischen dem ersten Kupplungsglied 14 und dem zweiten Kupplungsglied 16 ein zweiter ringzylindrischer Luftspalt 22 gebildet.

Das zweite Kupplungsglied 16 hat den Magnetfluss-Polen 14c des ersten Kupplungsglieds 14 zugewandte, mit diesen korrespondierende Permanentmagnet-Elemente N, S, die in einigen (Dreh-)Positionen des zweiten Kupplungsglieds 16 relativ zum ersten Kupplungsglied 14 mit allen oder nahezu allen der Magnetfluss-Pole 14c fluchten. Die Permanentmagnet-Elemente N, S sind aus einem Magnetwerkstoff gebildet (zum Beispiel aus einer SmCo- oder NdFeB-Legierung), haben eine im Wesentlichen quaderförmige Gestalt und sind eingebettet in ein magnetisch nicht wirksames Tragrohr 16c. Die magnetische Orientierung zueinander benachbarter Permanentmagnet-Elemente N, S des zweiten Kupplungsglieds 16 ist zu dem Luftspalt 16 hin jeweils abwechselnd. Durch die mehreren Reihen benachbarter Permanentmagnet-Elemente N, S in Umfangsrichtung des zweiten Kupplungsglieds 16 ergibt sich hier ein Muster abwechselnder magnetischer Orientierung mit zueinander in Umfangsrichtung um die elektrische Phasenlage der entsprechenden Spulenanordnungen verschobenen Permanentmagnet-Elementen N, S.

Das erste Kupplungsglied 14 hat an einem (in der Fig. 1 unteren) Ende einen ersten Koppelflansch 14e und das zweite Kupplungsglied 16 hat an einem (in der Fig. 1 oberen) Ende einen zweiten Koppelflansch 16e.

Die Spulenanordnung 18 ist mit einem Wechselrichter WR verbunden um das Maß der Übertragung des Drehmoments und/ oder der Drehbewegung von dem einen Kupplungsglied auf das andere Kupplungsglied zu beeinflussen. Der Wechselrichter WR ist mit einer elektronischen Steuereinrichtung ES verbunden, um das von dem einen Kupplungsglied auf das andere Kupplungsglied übertragene Drehmoment und/ oder die Drehbewegung durch die Frequenz, Phase, Betrag und / oder die Flussrichtung der elektrischen Leistung beeinflusst, welche zwischen dem Wechselrichter WR und der Spulenanordnung 18 fließt.

Die Magnetfluss-Pole 14c des zweiten weicheisenhaltigen Teilkern 14b sind soweit voneinander beabstandet, und abwechselnd orientiert, dass sie finger- oder krallenartig ineinander greifen und so die Spulenanordnung 18 an ihrer Innenseite umgreifen und zusammen mit dem ersten weicheisenhaltigen Teilkern 12b einfassen. In Umfangsrichtung zueinander benachbarte Magnetfluss-Pole 14c verjüngen sich koaxial zu der Drehachse in abwechselnder Richtung und greifen versetzt zwischen einander.

Die Spulenanordnung 18 ist als Ringzylinderspule aus Litzen, bestehend aus miteinander verdrillten oder verflochtenen lackisolierten Einzelleitern oder aus Einzelleitern, in einem Spulenkörper aus Kunststoff gewickelt. Der Spulenkörper hat einen Anschlusskanal, der von der Außenseite des Spulenkörpers bis zu dem Wechselrichter WR außerhalb der Kupplung reicht. Zur Bildung der Spulenanordnung 18 können Litzen bestehend aus lackisolierten, miteinander verdrillten oder verflochtenen Einzelleitern verwendet werden. Dies wirkt der Erhöhung des Leiterwiderstandes bei höheren Frequenzen entgegen. In einem elektrischen Leiter entstehen durch magnetische Felder des Wechselstromes Wirbelströme, die dem Stromfluss entgegenwirken. Diese Wirbelströme nehmen bei höheren Frequenzen zu. Zum Gleichstromwiderstand addiert sich demnach ein von der Frequenz abhängiger Wechselstrom-Wirkwiderstand. Um die vorgenannten Verluste so gering wie möglich zu halten, wird der Leiterquerschnitt reduziert, was weniger Wirbelstromverluste hervorruft und führt dafür mehrere Leiter parallel. Um die Strom-Asymmetrie der einzelnen Leiter auszugleichen, werden die Leiter miteinander verdrillt oder verseilt.

Der Einzelleiterquerschnitt der Spulenanordnung 18 sollte mit steigender Frequenz abnehmen; im Bereich um 1 kHz sollte der Einzelleiterquerschnitt etwa 0.4 mm betragen. Zur Verbesserung des Füllfaktors (Rauminhalt des Wickelraumes bezogen auf den Rauminhalt der elektrischen Leiters) setzt man vorzugsweise Litzen mit rechteckigem Profil ein. Der Füllfaktorgewinn ergibt sich aus der Verdichtung der Litze, der besseren Füllung des Wickelraumes durch die Rechteckgeometrie. Der Einzelleiter kann eine oder mehrere Umspinnungen / Umflechtungen mit unterschiedlichen Garnen, z.B. Polyamid, Baumwolle, Glas, Polyester, Aramid, usw. haben. Auch können eine oder mehrere Bandagierungen mit Polyesterfolien, Polyimidfolien, Aramidpapier, Glasbänder, etc. eingesetzt sein. Isolationen aus klebebeschichteten Folien wie Polyester und Polyimid werden wärmebehandelt, um eine gut verklebte Isolation zu erreichen. Kombinationen der vorgenannten Maßnahmen sind ebenfalls einsetzbar. Anstelle der Litzen kann auch eine massive Kupferleitung aus einem Kupferband die Wicklung bilden. Auch hierbei kann die Leitung verdrillt werden. Das Kupferband sollte dünn sein.

Das erste Kupplungsglied und das zweite Kupplungsglied sind zum Beispiel - in einem nicht weiter veranschaulichten Antriebsstrang eines Kraftfahrzeuges - zwischen einer Kurbelwelle eines Verbrennungsmotors und einem Getriebeeingang angeordnet um, gesteuert durch die Einspeisung oder Auskopplung elektrischer Leistung durch den bzw. in den Wechselrichter WR, Schwingungen des Verbrennungsmotors zu dämpfen und / oder dabei elektrische Leistung in ein elektrisches Bordnetz des Kraftfahrzeuges auszukoppeln.

Das erste Kupplungsglied 14 und das zweite Kupplungsglied 16 sind durch einen als Spiralfeder ausgebildeten Federspeicher 30 miteinander verbunden. Dabei sind das äußere und das innere Ende der Spiralfeder jeweils fest mit dem ersten Kupplungsglied 14 bzw. dem zweiten Kupplungsglied 16 verbunden. Dies erlaubt eine - begrenzte - Relativdrehung zwischen dem ersten Kupplungsglied 14 und dem zweiten Kupplungsglied 16 und eine Drehmomentübertragung des statischen Drehmoments über die Feder 30.

In einer anderen Variante sind das erste Kupplungsglied 14 und das zweite Kupplungsglied 16 dazu eingerichtet, beliebige Drehwinkel zu einander einzunehmen. Dies wird durch Weglassen des Federspeichers 30 erreicht. In diesem Fall kann zwischen dem ersten Kupplungsglied 14 und dem zweiten Kupplungsglied 16 ein Generatorbetrieb oder ein Motorbetrieb durch entsprechende Ansteuerung des Wechselrichters durch die elektronische Steuereinrichtung eingestellt werden.

Im Antriebsstrang des Kraftfahrzeuges wird so eine Anordnung bereitgestellt, bei der sich zwischen Kurbelwelle und Getriebeeingang die Federanordnung befindet und Drehschwingungen aufnehmen kann. Parallel zu der Federanordnung, also diese überbrückend, ist die hier beschriebene Kupplung angeordnet. Dabei ist zum Beispiel die Kurbelwelle mit dem Kupplungsglied drehfest verbunden, das die Permanentmagnete trägt und die EingangsweIle eines Getriebes ist mit dem anderen Kupplungsglied drehfest verbunden. Der Träger mit der Spulenanordnung ist ortsfest und wird über einen Wechselrichter gespeist. Die Einrichtung kann Schwingungen dämpfen und dabei auch elektrische Leistung in das elektrische Bordnetz des Kraftfahrzeugs auskoppeln.

Wenn das zu übertragende statische Drehmoment zu groß ist, ist - ohne die Feder - auch (i) ein Generatorbetrieb nach Art einer Lichtmaschine bei einer Relativdrehzahl zwischen Kurbelwelle und Getriebeeingang, (ii) ein Motorbetrieb nach Art eines Anlassers zum Beispiel gegen ein blockiertes Getriebe, z. B. über Bremse, und (iii) ein Hybridbetrieb mit elektrischem Anfahren bei blockiertem Verbrennungsmotor und einer zusätzlichen Drehmomenteinspeisung beim Beschleunigen des Kraftfahrzeuges möglich.

Die vorangehend beschriebenen Varianten der Kupplung dienen lediglich dem besseren Verständnis der Struktur, der Funktionsweise und der Eigenschaften; sie schränken die Offenbarung nicht etwa auf die Ausführungsbeispiele ein. Die Fig. sind schematisch, wobei wesentliche Eigenschaften und Effekte zum Teil deutlich vergrößert dargestellt sind, um die Funktionen, Wirkprinzipien, technischen Ausgestaltungen und Merkmale zu verdeutlichen.

Dabei kann jede den Fig. oder im Text offenbarte Funktionsweise, jedes Prinzip, jede technische Ausgestaltung und jedes Merkmal, mit allen Ansprüchen, jedem Merkmal im Text und in den anderen Fig., anderen Funktionsweisen, Prinzipien, technischen Ausgestaltungen und Merkmalen, die in dieser Offenbarung enthalten sind oder sich daraus ergeben, frei und beliebig kombiniert werden, so dass alle denkbaren Kombinationen der beschriebenen Kupplung zuzuschreiben sind. Dabei sind auch Kombinationen zwischen allen einzelnen Ausführungen im Text, das heißt in jedem Abschnitt der Beschreibung, in den Ansprüchen und auch Kombinationen zwischen verschiedenen Varianten im Text, in den Ansprüchen und in den Fig. umfasst.

Auch die Ansprüche begrenzen nicht die Offenbarung und damit die Kombinationsmöglichkeiten aller aufgezeigten Merkmale untereinander. Alle aufgezeigten Merkmale sind explizit auch einzeln und in Kombination mit allen anderen Merkmalen hier offenbart.

## Patentansprüche

1. Elektrisch zu betätigende Kupplung (10) aufweisend
- einen ortsfesten Träger (12) sowie ein erstes Kupplungsglied (14) und ein zweites Kupplungsglied (16), wobei
- das erste Kupplungsglied (14) und das zweite Kupplungsglied (16) um eine gemeinsame Achse relativ zu dem ortsfesten Träger (12) und relativ zueinander drehbar angeordnet sind und dazu eingerichtet sind, ein Drehmoment und/ oder eine Drehbewegung von dem einen Kupplungsglied (14, 16) auf das andere Kupplungsglied (16, 14) zu übertragen,
- der Träger (12) eine in einem ersten weicheisenhaltigen Teilkern (12a) teilweise aufgenommene Spulenanordnung (18) aufweist, die dem ersten Kupplungsglied (14) zugewandt ist,
- das erste Kupplungsglied (14) einen zweiten weicheisenhaltigen Teilkern (14a) mit Magnetfluss-Polen (14c) aufweist, welche die Spulenanordnung (18) des ortsfesten Trägers (12) zusammen mit dem weicheisenhaltigen ersten Teilkern (14b) in radialer Richtung zumindest teilweise einfassen und dem zweiten Kupplungsglied (16) zugewandt sind,
- das zweite Kupplungsglied (16) den Magnetfluss-Polen (14c) zugewandte, mit diesen korrespondierende Permanentmagnet-Elemente (N, S) aufweist, die zumindest in einigen Positionen des zweiten Kupplungsglieds (16) relativ zum ersten Kupplungsglied (14) zumindest teilweise mit wenigstens einigen der Magnetfluss-Pole (N, S) fluchten, wobei
- das erste Kupplungsglied (14) und das zweite Kupplungsglied (16) dazu eingerichtet sind, ein Drehmoment und/ oder eine Drehbewegung von dem einen Kupplungsglied (14, 16) auf das andere Kupplungsglied (16, 14) zu übertragen, und
die Spulenanordnung (18) dazu eingerichtet ist, mit einem Wechselrichter (WR) verbunden zu sein um das Maß der Übertragung des Drehmoments und/ oder der Drehbewegung von dem einen Kupplungsglied (14, 16) auf das andere Kupplungsglied (16, 14) zu beeinflussen.

2. Die elektrisch zu betätigende Kupplung (10) nach Anspruch 1, wobei
- der erste Teilkern (12b) des Trägers (12) und der zweite Teilkern (14b) des ersten Kupplungsglieds (14) durch einen ersten Luftspalt (20) voneinander getrennt sind, und / oder
- der zweite Teilkern (14b) des ersten Kupplungsglieds (14) an seiner von dem ersten Luftspalt (20) abgewandten Seite von den Permanentmagnet-Elementen (N, S) des zweiten Kupplungsglieds (16) durch einen zweiten Luftspalt (22) getrennt ist.

3. Die elektrisch zu betätigende Kupplung (10) nach Anspruch 1 oder 2, wobei
- der erste Teilkern (12b) des Trägers (12) und der zweite Teilkern (14b) des ersten Kupplungsglieds (14) zueinander korrespondierende, drehsymmetrische Umfangsflächen haben, die den ersten Luftspalt (20) begrenzen.

4. Die elektrisch zu betätigende Kupplung (10) nach einem der vorhergehenden Ansprüche, wobei
- der zweite Teilkern (14b) des ersten Kupplungsglieds (14) und die Permanentmagnet-Elemente (N, S) des zweiten Kupplungsglieds (16) zueinander korrespondierende, drehsymmetrische Umfangsflächen aufweisen, die den zweiten Luftspalt (22) begrenzen.

5. Die elektrisch zu betätigende Kupplung (10) nach einem der vorhergehenden Ansprüche, wobei
- zueinander in Umlaufrichtung des zweiten Kupplungsglieds (16) benachbarte Permanentmagnet-Elemente (N, S) jeweils zu dem zweiten Luftspalt (22) hin magnetisch abwechselnd orientiert sind.

6. Die elektrisch zu betätigende Kupplung (10) nach einem der vorhergehenden Ansprüche, wobei
- das erste Kupplungsglied (14) einen ersten Koppelflansch (14e) und / oder
- das zweite Kupplungsglied (16) einen zweiten Koppelflansch (16e) aufweist.

7. Die elektrisch zu betätigende Kupplung (10) nach einem der vorhergehenden Ansprüche, wobei
- der Wechselrichter (WR) mit einer elektronischen Steuereinrichtung (ES) verbunden ist, welche das von dem einen Kupplungsglied auf das andere Kupplungsglied übertragene Drehmoment und/ oder die Drehbewegung durch die Frequenz, Phase, Betrag und / oder die Flussrichtung der elektrischen Leistung beeinflusst, welche zwischen dem Wechselrichter (WR) und der Spulenanordnung (18) fließt.

8. Die elektrisch zu betätigende Kupplung (10) nach einem der vorhergehenden Ansprüche, wobei
- der erste Teilkern (12b) des Trägers (12) und / oder der zweite Teilkern (14b) des ersten Kupplungsglieds (14) einteilig oder mehrteilig aus einem weicheisenhaltigen Blech oder aus gepresstem, gesintertem Reineisenpulver oder aus eisenhaltigem Pulver gebildet sind.

9. Die elektrisch zu betätigende Kupplung (10) nach einem der vorhergehenden Ansprüche, wobei
- die Permanentmagnet-Elemente (N, S) eine im Wesentlichen quaderförmige Gestalt aufweisen, und / oder in einer Halbachanordnung am Umfang des Trägers (12) angeordnet sind.

10. Die elektrisch zu betätigende Kupplung (10) nach einem der vorhergehenden Ansprüche, wobei
- das erste Kupplungsglied (14) und das zweite Kupplungsglied (16) durch einen Federspeicher (30) miteinander verbunden sind.
